# EUROPEAN PATENT APPLICATION

(11) **EP 2 056 492 A1**
(43) Date of publication of application: **06.05.2009**
(21) Application number: 07791069.3
(22) Date of filing: 20.07.2007
(51) Int. Cl.: H04B 10/12, G02B 6/00, G02B 6/42, H04B 10/10, H04B 10/105, H04B 10/13, H04B 10/135, H04B 10/14, H04B 10/22

(54) **MOBILE OPTICAL COMMUNICATION SYSTEM AND MOBILE OPTICAL COMMUNICATION METHOD**

(30) Priority: 07.08.2006 JP 2006214192
(71) Applicant: Hamamatsu Photonics K.K., Hamamatsu-shi, Shizuoka 435-8558 (JP)
(72) Inventor: NAKAJIMA, Kazutoshi, Shizuoka 435-8558 (JP); HANAJIMA, Masaaki, Shizuoka 435-8558 (JP); AMANO, Yoshihisa, Shizuka 435-8558 (JP); OHSUGI, Akira, Shizuoka 435-8558 (JP); WANG, You, Shizuoka 435-8558 (JP); YAMAUCHI, Toyohiko, Shizuoka 435-8558 (JP); NAKAMURA, Tomonori, Shizuoka 435-8558 (JP)
(74) Representative: Wightman, David Alexander
(86) International application number: PCT/JP2007/064331
(87) International publication number: WO 2008/018281

(57) **Abstract**

A mobile optical communication system (1) includes a railway (2) and a train (3). A plurality of leaky optical fibers (10), a plurality of optical fibers (20), and a plurality of light receivers (21) are located along the railway. The leaky optical fiber includes light leaking parts (13). The light leaking parts are disposed discontinuously along the longitudinal direction and arranged at intervals less than or equal to a length of the train with respect to a traveling direction of the train. A plurality of light receivers (32), that are disposed on the train, are arranged along the entire length of the train in the direction of travel at intervals less than or equal to a fixed length. Two neighboring light transmitters, that are disposed on the train, are arranged so that optical images of light from the two neighboring light transmitters toward the optical fiber have an overlapping region with respect to the traveling direction.

## Description

### TECHNICAL FIELD

The present invention relates to a mobile optical communication system and a mobile optical communication method and particularly to a mobile optical communication system and a mobile optical communication method employing optical fibers.

### BACKGROUND ART

A conventional mobile optical communication system well known in the art has leaky optical fibers provided in a moving vehicle and provided along a path of the moving vehicle. In this mobile optical communication system, the moving vehicle has a light-receiving unit. The light-receiving unit receives an optical signal that is transmitted from the leaky optical fiber provided along the path of the moving vehicle. Light-receiving units are provided along the path of the moving vehicle for receiving optical signals that are transmitted from the leaky optical fiber provided in the moving vehicle (see Patent Reference 1, for example).
Patent Reference 1: Japanese patent application publication No. 2004-282685

### DISCLOSURE OF THE INVENTION

### PROBLEMS TO BE SOLVED BY THE INVENTION

However, in the conventional mobile optical communication system, light leaks out from the leaky optical fiber in every direction along the entire length of the fiber. As a result, there is an enormous energy loss. This energy loss must be compensated for by continually injecting an absurdly intense optical signal into the leaky optical fiber. Consequently, it is quite difficult to incorporate the system into mobile communications on a train and the like.

Specifically, though light is constantly leaking from the leaky optical fiber along the entire length of the fiber axis, the light-receiving unit provided on the moving vehicle receives only a small portion of this light. In spite of this, certain intensity of light must be supplied to the fiver in order to maintain a suitable signal to noise ratio. In this case, power required for a light source is estimated to be several watts.

For example, when the light-receiving unit is configured of a semiconductor device, the light-receiving element of this device is set at about 0.1 mm in diameter. This is because larger light-receiving elements cannot be used in gigabit-class broadband communications. Supposing that the light-receiving elements are placed in the moving vehicle at intervals of 1 m, the light use efficiency is no better than 0.1 mm/1 m, or 1/10000. Let us also assume that the leak rate is such that the light will be exhausted after 100 m and that the light-receiving units must receive 1 µW of light in order to maintain the required signal-to-noise ratio, with consideration for the effects of ambient light. The input power at this time must be 1 µ W/0.1 mm×100 m, or 1 W. Naturally, the signal light must be amplified every 100 m.

That is, the light-receiving element must receive at least 1 µW of light intensity when the moving vehicle equipped with a light-receiving element 0.1 mm in diameter is traveling at any point on the railway spanning 100 m. Assuming that the rail track is substantially straight, the surface area of the track that the light-receiving element passes over is 100 m×0.1 mm, or 10⁻² m². At any position within the 10⁻² m² area, at least 1 µW of light must be incident on the light-receiving element which has a light-receiving circuit diameter of 0.1 mm, i.e., a light-receiving surface area of 0.00785×10⁻⁶ m². Therefore, the minimum required input power is 1 µ W×10⁻² m²÷0.00785×10⁻⁶ m² = 1.27 W, even when assuming that the light leaked from the optical fiber does not spread. However, since light leaked from the optical fiber does in fact spread spatially, it will actually be necessary to input several times this power.

Thus, the spreading of leaked light must be considered. Leaked light spreads spatially from the moment the light is radiated from the fiber. The signal light is a bit sequence that propagates within the fiber as a temporal pattern. If the signal bit rate is 1 Gb/s, a bit stream is provided every 20-30 cm. Since the occurrence of spatial spreading is equivalent to temporal distortion, such spreading can increase the bit error rate.

Therefore, it is an object of the present invention to provide a mobile optical communication system and a mobile optical communication method capable of reducing energy loss through efficient light transmission and reception.

### MEANS FOR SOLVING THE PROBLEMS

To attain the above object, the present invention provides a mobile optical communication system. The mobile optical communication system includes a moving body and an optical fiber cable. The moving body includes a plurality of moving body side light-receiving means. The optical fiber cable is laid along a path of the moving body and has a plurality of fiber side light-transmitting means transmitting light that is received by the plurality of moving body side light-receiving means. The plurality of fiber side light-transmitting means are arranged at intervals less than or equal to a length of the moving body with respect to a moving direction. The moving body side light-receiving means are arranged in the moving direction of the moving body at prescribed intervals less than or equal to the length of an optical image irradiated from the fiber side light-transmitting means toward the moving body in the moving direction of the moving body.

Preferably, the optical fiber cable is a leaky optical fiber cable. The leaky optical cable includes a core, a cladding, and a plurality of light leaking parts. The cladding is fixed to an outside of the core and has a refractive index lower than a refractive index of the core. The plurality of light leaking parts are formed discontinuously in the moving direction of the moving body and in contact with the core and have a refractive index lower than the refractive index of the core and higher than the refractive index of the cladding. The light leaking part functions as the fiber side light-transmitting means. Further, preferably, the light leaking part is provided in only a portion of the optical fiber cable with respect to a peripheral direction of the cable. Further, preferably, a light leaking part located downstream in the moving direction of the moving body among the plurality of light leaking parts has a higher leak rate of light than an upstream light leaking part located upstream among the plurality of light leaking parts. Further, preferably, a longitudinal length of light leaking part is less than or equal to a spatial length of a propagating optical signal equivalent to 1 bit. Or, preferably, the fiber side light-transmitting means is a light transmitter.

Preferably, the moving body includes a plurality of moving bodies. Each of the plurality of the moving bodies has a plurality of corresponding moving body side light-receiving means. The path of the moving body has a branching position at which the path branches from a single path into a plurality of branch paths, and a converging position at which a plurality of branch paths converge back into a single path. The path of the moving body has a plurality of segments that allow only one moving body from among the plurality of moving bodies to exist in each segment at the same time. Each branch path functions as one of the plurality of segments. The mobile optical communication system further includes a plurality of base stations having a one-to-one correspondence with the plurality of segments. The plurality of fiber side light-transmitting means in each segment are connected to the corresponding base station.

Further, the present invention provides a mobile optical communication system. The mobile optical communication system includes a moving body and an optical fiber cable. The moving body includes a plurality of moving body side light-transmitting means. The optical fiber cable is laid along a path of the moving body and has a plurality of fiber side light receiving means that are configured of receiving light that is transmitted from the plurality of moving body side light-transmitting means. The moving body side light-transmitting means are arranged along a moving direction of the moving body. Optical images irradiated toward the path of the moving body from any two neighboring moving body side light-transmitting means have an overlapping region that passes over each fiber side light-receiving means when the moving body moves along the path. The plurality of fiber side light-receiving means are arranged at intervals less than or equal to a length of the moving body in the moving direction.

Preferably, wavelengths of light transmitted from any two neighboring moving body side light-transmitting means are different from each other.

Further, preferably, the moving body includes a plurality of moving bodies. Each of the plurality of the moving bodies has a plurality of corresponding moving body side light-transmitting means. The path of the moving body includes a branching position at which the path branches from a single path into a plurality of branch paths, and a converging position at which a plurality of branch paths converge back into a single path. The path of the moving body has a plurality of segments that allow only one moving body from among the plurality of moving bodies to exist in each segment at the same time. Each branch path functions as one of the plurality of segments. The mobile optical communication system further includes a plurality of base stations having a one-to-one correspondence with the plurality of segments. The plurality of fiber side light-transmitting means in each segment are connected to the corresponding base station.

The present invention also provides a mobile optical communication system. The mobile optical communication system includes a moving body, a first optical fiber cable, and a second optical fiber cable. The moving body includes a plurality of moving body side light-receiving means and a plurality of moving body side light-transmitting means. The first optical fiber cable is laid along a path of the moving body and has a plurality of fiber side light-transmitting means transmitting light that is received by the plurality of moving body side light-receiving means. The second optical fiber cable has a plurality of fiber side light receiving means that are configured of receiving light that is transmitted from the plurality of moving body side light-transmitting means. The plurality of fiber side light-transmitting means are arranged at intervals less than or equal to a length of the moving body with respect to a moving direction. The moving body side light-receiving means are arranged in the moving direction of the moving body at prescribed intervals less than or equal to a length of an optical image irradiated from the fiber side light-transmitting means toward the moving body in the moving direction of the moving body. Optical images irradiated toward the path of the moving body from any two neighboring moving body side light-transmitting means have an overlapping region that passes over each fiber side light-receiving means when the moving body moves along the path. The plurality of fiber side light-receiving means are arranged at intervals less than or equal to the length of the moving body in the moving direction.

Preferably, wavelengths of light transmitted from any two neighboring moving body side light-transmitting means are different from each other and different from a wavelength of light transmitted from the fiber side light-transmitting means.

Here, preferably, the first optical fiber cable is a leaky optical fiber cable. The leaky optical fiber cable includes a core, a cladding, and a plurality of light leaking parts. The cladding is fixed to the outside of the core and has a refractive index lower than a refractive index of the core. The plurality of light leaking parts are formed discontinuously in the moving direction of the moving body and in contact with the core and have a refractive index lower than the refractive index of the core and higher than the refractive index of the cladding. The light leaking parts functions as the fiber side light-transmitting means. Further, preferably, the light leaking part is provided in only a portion of the optical fiber cable with respect to a peripheral direction of the cable. Further, preferably, a light leaking part located downstream in the moving direction of the moving body among the plurality of light leaking parts has a higher leak rate of light than an upstream light leaking part located upstream among the plurality of light leaking parts. Or, preferably, the fiber side light-transmitting means is a light transmitter.

Preferably, the moving body includes a plurality of moving bodies. Each of the plurality of the moving bodies has the corresponding moving body side light-transmitting means and a plurality of corresponding moving body side light-receiving means. The path of the moving body has a branching position at which the path branches from a single path into a plurality of branch paths, and a converging position at which a plurality of branch paths converge back into a single path. The path of the moving body has a plurality of segments that allow only one moving body from among the plurality of moving bodies to exist in each segment at the same time. Each branch path functions as one of the plurality of segments. The mobile optical communication system further includes a plurality of base stations having a one-to-one correspondence with the plurality of segments. The plurality of fiber side light-transmitting means in each segment and the plurality of fiber side light-receiving means in each segment are connected to the corresponding base station.

Further, the invention provides a mobile optical communication method. The mobile optical communication method includes sending light along a path of a moving body, transmitting the light that is sent along the path of the moving body toward the moving body from a plurality of transmitting positions located on the path of the moving body, and receiving the light sent toward the moving body at at least one of a plurality of light-receiving positions of the moving body. The plurality of transmitting positions on the path are arranged at intervals less than or equal to a length of the moving body with respect to a moving direction. The plurality of light-receiving positions of the moving body are arranged in the moving direction of the moving body at prescribed intervals less than or equal to a length of optical images irradiated from the plurality of transmitting positions on the path toward the moving body in the moving direction of the moving body.

The present invention also provides a mobile optical communication method. The mobile optical communication method includes transmitting light from a plurality of transmitting positions of a moving body, receiving the transmitted light at at least one of a plurality of light-receiving positions located on a path of the moving body, and sending, along the path of the moving body, the light received at the at least one of the plurality of light-receiving positions located on the path of the moving body of the moving body. Optical images irradiated toward the path of the moving body from any two neighboring moving side transmitting positions have an overlapping region that passes over each light-receiving position on the path when the moving body moves along the path. The plurality of light-receiving positions on the path are arranged at intervals less than or equal to a length of the moving body in a moving direction.

Preferably, wavelengths of light transmitted from any two neighboring moving body side transmitting positions are different from each other.

Further, preferably, the present invention provides a mobile optical communication method. The mobile optical communication method includes sending light along a path of a moving body, transmitting the light that is sent along the path of the moving body toward the moving body from a plurality of transmitting positions, receiving the light sent toward the moving body at at least one of a plurality of light-receiving positions of the moving body, transmitting light from a plurality of transmitting positions located on a moving body, receiving the transmitted light at at least one of a plurality of light-receiving positions located on the path of the moving body, and sending, along the path of the moving body, the light received at the at least one of the plurality of light-receiving positions located on the path of the moving body. The plurality of transmitting positions on the path are arranged at intervals less than or equal to a length of the moving body with respect to a moving direction. The plurality of light-receiving positions of the moving body are arranged in the moving direction of the moving body at prescribed intervals less than or equal to a length of optical images irradiated from the plurality of transmitting positions on the path toward the moving body in the moving direction of the moving body. Optical images irradiated toward the path of the moving body from any two neighboring moving side transmitting positions have an overlapping region that passes over each light-receiving position on the path when the moving body moves along the path. The plurality of light-receiving positions on the path are arranged at intervals less than or equal to the length of the moving body in the moving direction.

Preferably, wavelengths of light transmitted from any two neighboring moving body side transmitting positions are different from each other and different from a wavelength of light transmitted from the transmitting position on the path.

### EFFECTS OF THE INVENTION

According to the mobile optical communication system recited in claim 1, the plurality of fiber side light-transmitting means are arranged at intervals less than or equal to a length of the moving body with respect to a moving direction. The moving body side light-receiving means are arranged in the moving direction of the moving body at prescribed intervals less than or equal to the length of an optical image irradiated from the fiber side light-transmitting means toward the moving body in the moving direction of the moving body. Accordingly, at least one of the plurality of moving body side light-receiving means can reliably receive light transmitted from the fiber side light-transmitting means when the moving body is located at any point on the path of the moving body. Thereby a seamless downlink can be achieved.

According to the mobile optical communication system recited in claim 2, the optical fiber cable is a leaky optical fiber cable. Accordingly, device installation is simplified, thereby reducing the cost of installation.

According to the mobile optical communication system recited in claim 3, the light leaking part is provided in only a portion of the optical fiber cable with respect to a peripheral direction of the cable. Hence, light leaking from the light leaking parts can be limited with respect to the peripheral direction. By reducing the amount of needless light leakage in this way, the optical signal can propagate over a longer distance.

According to the mobile optical communication system recited in claim 4, a light leaking part located downstream in the moving direction of the moving body among the plurality of light leaking parts has a higher leak rate of light than an upstream light leaking part located upstream among the plurality of light leaking parts. Hence, the quantity of light leaked from each light leaking part can be kept constant, ensuring stable optical communications.

According to the mobile optical communication system recited in claim 5, a longitudinal length of light leaking part is less than or equal to a spatial length of a propagating optical signal equivalent to 1 bit. Consequently, a plurality of bit signals is not emitted into space at once, achieving a stable downlink with no signal distortion.

According to the mobile optical communication system recited in claim 6, the fiber side light-transmitting means is a light transmitter. An accurate optical communications is achieved with few errors.

According to the mobile optical communication system recited in claim 7, the moving body includes a plurality of moving bodies. Each of the plurality of the moving bodies has the corresponding moving body side light-transmitting means and a plurality of corresponding moving body side light-receiving means. The path of the moving body has a branching position at which the path branches from a single path into a plurality of branch paths, and a converging position at which a plurality of branch paths converge back into a single path. The path of the moving body has a plurality of segments that allow only one moving body from among the plurality of moving bodies to exist in each segment at the same time. Each branch path functions as one of the plurality of segments. The mobile optical communication system further includes a plurality of base stations having a one-to-one correspondence with the plurality of segments. The plurality of fiber side light-transmitting means in each segment and the plurality of fiber side light-receiving means in each segment are connected to the corresponding base station. Hence, downlinks for a plurality of moving bodies on branch paths within the path of the moving body can be achieved with no crosstalk between the moving bodies. Further, each of the moving bodies can achieve a seamless downlink independently.

According to the mobile optical communication system recited in claim 8, the moving body side light-transmitting means are arranged along a moving direction of the moving body. Optical images irradiated toward the path of the moving body from any two neighboring moving body side light-transmitting means have an overlapping region that passes over each fiber side light-receiving means when the moving body moves along the path. The plurality of fiber side light-receiving means are arranged at intervals less than or equal to a length of the moving body in the moving direction. Accordingly, light transmitted from at least one of the plurality of moving body side light-transmitting means can be received at the fiber side light-receiving means when the moving body is located at any position of the path of the moving body. Accordingly, a seamless uplink can be achieved.

According to the mobile optical communication system recited in claim 9, wavelengths of light transmitted from any two neighboring moving body side light-transmitting means are different from each other. This configuration avoids noise caused by interference between light irradiated from any two neighboring moving body side light-transmitting means. Hence, the fiber side light-receiving means reliably receive light transmitted from the moving body side light-transmitting means, thereby achieving uplink with no crosstalk.

According to the mobile optical communication system recited in claim 10, the moving body includes a plurality of moving bodies. Each of the plurality of the moving bodies has a plurality of corresponding moving body side light-transmitting means. The path of the moving body includes a branching position at which the path branches from a single path into a plurality of branch paths, and a converging position at which a plurality of branch paths converge back into a single path. The path of the moving body has a plurality of segments that allow only one moving body from among the plurality of moving bodies to exist in each segment at the same time. Each branch path functions as one of the plurality of segments. The mobile optical communication system further includes a plurality of base stations having a one-to-one correspondence with the plurality of segments. The plurality of fiber side light-transmitting means in each segment are connected to the corresponding base station. Accordingly, uplink with no crosstalk between the plurality of moving bodies on a path of the mobbing body having branching paths can be achieved. Further, the plurality of moving bodies can independently perform seamless uplink.

According to the mobile optical communication system recited in claim 11, the plurality of fiber side light-transmitting means are arranged at intervals less than or equal to a length of the moving body with respect to a moving direction. The moving body side light-receiving means are arranged in the moving direction of the moving body at prescribed intervals less than or equal to a length of an optical image irradiated from the fiber side light-transmitting means toward the moving body in the moving direction of the moving body. Optical images irradiated toward the path of the moving body from any two neighboring moving body side light-transmitting means have an overlapping region that passes over each fiber side light-receiving means when the moving body moves along the path. The plurality of fiber side light-receiving means are arranged at intervals less than or equal to the length of the moving body in the moving direction. When the moving body is located at any position on the path of the moving body, at least one of the plurality of moving body side light-receiving means can reliably receive light transmitted from the light-transmitting means. When the moving body is located at any position on the path of the moving body, light transmitted from at least one of the plurality of moving body side light-transmitting means can be received by the fiber side light-receiving means. Accordingly, the seamless bi-directional communications can be achieved.

According to the mobile optical communication system recited in claim 12, wavelengths of light transmitted from any two neighboring moving body side light-transmitting means are different from each other and different from a wavelength of light transmitted from the fiber side light-transmitting means. This configuration avoids noise caused by interference between light irradiated from any two neighboring moving body side light-transmitting means and the fiber side light-transmitting means. Hence, the fiber side light-receiving means reliably receive light transmitted from the moving body side light-transmitting means, and the moving body side light-receiving means reliably receive light transmitted from the fiber side light-transmitting means. Thereby bi-directional communications can be achieved with no crosstalk.

According to the mobile optical communication system recited in claim 13, the first optical fiber cable is a leaky optical fiber cable. Consequently, device installation is simplified, thereby reducing the cost of installation.

According to the mobile optical communication system recited in claim 14, the light leaking part is provided in only a portion of the optical fiber cable with respect to a peripheral direction of the cable. Hence, light leaking from the light leaking parts can be limited with respect to the peripheral direction. By reducing the amount of needless light leakage in this way, the optical signal can propagate over a longer distance.

According to the mobile optical communication system recited in claim 15, a light leaking part located downstream in the moving direction of the moving body among the plurality of light leaking parts has a higher leak rate of light than an upstream light leaking part located upstream among the plurality of light leaking parts. Hence, the quantity of light leaked from each light leaking part can be kept constant, ensuring stable optical communications.

According to the mobile optical communication system recited in claim 16, the fiber side light-transmitting means is a light transmitter. An accurate optical communications is achieved with few errors.

According to the mobile optical communication system recited in claim 17, the moving body includes a plurality of moving bodies. Each of the plurality of the moving bodies has the corresponding moving body side light-transmitting means and a plurality of corresponding moving body side light-receiving means. The path of the moving body has a branching position at which the path branches from a single path into a plurality of branch paths, and a converging position at which a plurality of branch paths converge back into a single path. The path of the moving body has a plurality of segments that allow only one moving body from among the plurality of moving bodies to exist in each segment at the same time. Each branch path functions as one of the plurality of segments. The mobile optical communication system further includes a plurality of base stations having a one-to-one correspondence with the plurality of segments. The plurality of fiber side light-transmitting means in each segment and the plurality of fiber side light-receiving means in each segment are connected to the corresponding base station. Accordingly, bi-directional communications can be achieved with no crosstalk between the plurality of moving bodies on a moving path having branching paths. Further, the plurality of moving bodies can independently perform seamless bi-directional communications.

According to the mobile optical communication system recited in claim 18, the plurality of transmitting positions on the path are arranged at intervals less than or equal to a length of the moving body with respect to a moving direction. The plurality of light-receiving positions of the moving body are arranged in the moving direction of the moving body at prescribed intervals less than or equal to a length of optical images irradiated from the plurality of transmitting positions on the path toward the moving body in the moving direction of the moving body. Accordingly, at least one of the plurality of moving body side light-receiving position can reliably receive light transmitted from the fiber side transmitting position on the path when the moving body is located at any point on the path of the moving body. Thereby a seamless downlink can be achieved.

According to the mobile optical communication system recited in claim 19, optical images irradiated toward the path of the moving body from any two neighboring moving side transmitting positions have an overlapping region that passes over each light-receiving position on the path when the moving body moves along the path. The plurality of light-receiving positions on the path are arranged at intervals less than or equal to a length of the moving body in a moving direction. Accordingly, light transmitted from at least one of the plurality of transmitting positions of the moving body can be received at the light-receiving position on the path when the moving body is located at any position of the path of the moving body. Accordingly, a seamless uplink can be achieved.

According to the mobile optical communication system recited in claim 20, wavelengths of light transmitted from any two neighboring moving body side transmitting positions are different from each other. This configuration avoids noise caused by interference between light irradiated from any two neighboring transmitting positions of the moving body. Hence, the light-receiving position on the path reliably receives light transmitted from the transmitting position of the moving body, thereby achieving uplink with no crosstalk.

According to the mobile optical communication system recited in claim 21, the plurality of transmitting positions on the path are arranged at intervals less than or equal to a length of the moving body with respect to a moving direction. The plurality of light-receiving positions of the moving body are arranged in the moving direction of the moving body at prescribed intervals less than or equal to a length of optical images irradiated from the plurality of transmitting positions on the path toward the moving body in the moving direction of the moving body. Optical images irradiated toward the path of the moving body from any two neighboring moving side transmitting positions have an overlapping region that passes over each light-receiving position on the path when the moving body moves along the path. The plurality of light-receiving positions on the path are arranged at intervals less than or equal to the length of the moving body in the moving direction. When the moving body is located at any position on the path of the moving body, at least one of the plurality of light-receiving positions of the moving body can reliably receive light transmitted from the transmitting position on the path. When the moving body is located at any position on the path of the moving body, light transmitted from at least one of the plurality of transmitting positions of the moving body can be received by the light-receiving position on the path. Accordingly, the seamless bi-directional communications can be achieved.

According to the mobile optical communication system recited in claim 22, wavelengths of light transmitted from any two neighboring moving body side transmitting positions are different from each other and different from a wavelength of light transmitted from the transmitting position on the path. This configuration avoids noise caused by interference between light irradiated from any two neighboring transmitting positions of the moving body and the transmitting position on the path. Hence, the light-receiving position on the path reliably receive light transmitted from at least one of the plurality of the transmitting positions of the moving body, and at least one of the plurality of the light-receiving positions of the moving body reliably receive light transmitted from the light-transmitting position on the path. Thereby bi-directional communications can be achieved with no crosstalk.

### BRIEF DESCRIPTION OF THE DRAWINGS

Fig. 1 is an explanatory diagram showing a overall structure of a mobile optical communication system according to a first embodiment of the present invention;
Fig. 2 is a perspective view showing a structure of a leaky optical fiber;
Fig. 3 is a cross-sectional view of the leaky optical fiber taken in a direction orthogonal to an optical axis of the leaky optical fiber;
Fig. 4 is a side view of the mobile optical communication system according to the first embodiment showing a path of light irradiated from a light leaking part in the leaky optical fiber;
Fig. 5 is an explanatory diagram showing a configuration of optical fibers used in the mobile optical communication system according to the first embodiment;
Fig. 6 is a side view of the mobile optical communication system according to the first embodiment showing a path of light irradiated from light transmitters provided in the train;
Fig. 7 is an explanatory diagram showing a overall structure of a mobile optical communication system according to a second embodiment;
Fig. 8 is an explanatory diagram showing a configuration of a light transmitter according to a modification; and
Fig. 9 is an explanatory diagram showing a configuration of a light transmitter according to another modification.

### EXPLANATION OF REFERENCE NUMERALS

1: mobile optical communication system
2: railway 3: train 4: base station
5: relay station 6: public internet base station
10: leaky optical fiber 11: core
12: cladding 13: light leaking part
20: optical fiber 21: light receiver
25: signal generator 31: reception optical fiber
32: light receiver 33: demodulator
34: transmission optical fiber
35: signal generator 36: light transmitter
101: mobile optical communication system
102a-102d: railway 103x, 103y: train
104a-104d: base station 105: relay station
106: public internet base station
110a-110d: leaky optical fiber
113a-113d: light leaking part
120a-120d: optical fiber 121a-121d: light receiver
220, 320: light transmitter
131x, 131y: reception optical fiber
133x, 133y: demodulator
134x, 134y: transmission optical fiber
135x, 135y: signal generator
136x, 136y: light transmitter
P1: patch P2: path

### BEST MODE FOR CARRYING OUT THE INVENTION

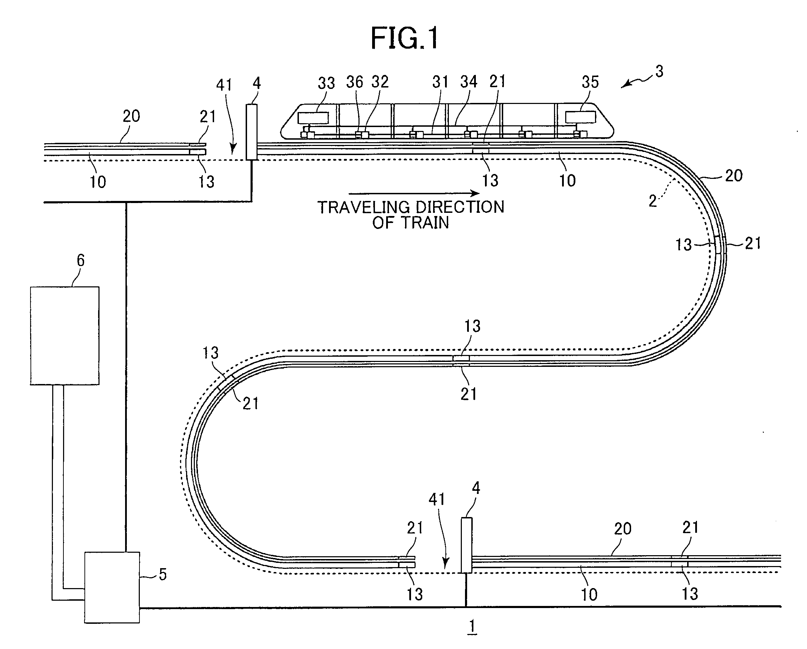

A mobile optical communication system according to a first embodiment of the present invention will be described while referring to Figs. 1-6. A mobile optical communication system 1 according to the present embodiment implements highspeed communications between a Shinkansen (bullet train) or other railway vehicle and the Internet or another network. Fig. 1 is an explanatory diagram showing the overall structure of the mobile optical communication system 1. The mobile optical communication system 1 includes a railway 2, a train 3, a plurality of base stations 4, a relay station 5, and a public internet base station 6. The mobile optical communication system 1 also includes a plurality of leaky optical fibers 10, a plurality of optical fibers 20, and a plurality of light receivers 21 disposed along the railway 2.

The train 3 travels along the railway 2. The train 3 is provided with a reception optical fiber 31, a plurality of light receivers 32, a demodulator 33, a transmission optical fiber 34, a signal generator 35, and a plurality of light transmitters 36.

The base stations 4 are provided at regular intervals along the railway 2 and are each connected to the relay station 5 by a network line. The relay station 5 is connected to the internet base station 6 by a network line. The base stations 4 should be arranged at intervals small enough that a maximum of one train 3 can exist between any two adjacent base stations 4 at any one time in order to prevent crosstalk between signals from a plurality of trains on the railway 2. For example, ATC (Automatic Train Control) units are provided for constantly monitoring the current position of a Shinkansen (bullet train) or other railway train and define control segments in which only one train can operate at any one time. In the embodiment, it is preferable that the base stations 4 are installed at the same locations as the ATC units. ATC units for a Shinkansen and the like are generally installed at intervals of 3,000 m, for example. A plurality of the ATC units is generally controlled by a central control system every 20 km. Accordingly, the base stations 4 in the embodiment are also preferably installed at intervals of 3,000 m, and relay stations 5 to which a plurality of base stations 4 is connected are preferably installed every 20 km.

In the following description, an upstream side with respect to the direction that the train 3 travels (see Fig. 1) will be expressed simply as the upstream side, while the downstream side with respect to this direction of travel will simply be referred to as the downstream side.

First, a description will be given of the downlink, that is, the configuration for transferring light from the leaky optical fibers 10 provided on the railway 2 side to the train 3.

Each leaky optical fiber 10 is laid between two adjacent base stations 4. The leaky optical fiber 10 is connected to one of the base stations 4, either the base station 4 on the upstream side or the base station 4 on the downstream side. In the embodiment, the leaky optical fiber 10 is connected to the base station 4 on the upstream side. The base station 4 transmits an optical signal to the leaky optical fiber 10.

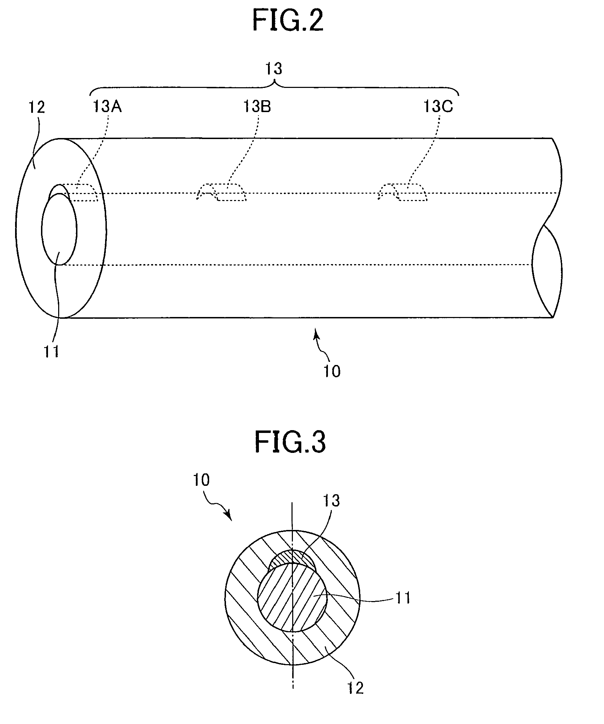

Fig. 2 is a perspective view showing the structure of the leaky optical fiber 10. Fig. 3 is a cross-sectional view of the leaky optical fiber 10 taken in a direction orthogonal to the optical axis of the leaky optical fiber 10 (the traveling direction of the train 3). The longitudinal direction of the leaky optical fiber 10 is equivalent to the traveling direction of the train 3.

As shown in Figs. 2 and 3, the leaky optical fiber 10 includes a core 11, a cladding 12, and light leaking parts 13. The core 11 is provided in the center region of the leaky optical fiber 10. The cladding 12 is provided around the core 11. The light leaking parts 13 are disposed in contact with the core 11, extending only partly in the circumferential direction of the core 11. As shown in Fig. 2, a plurality of the light leaking parts 13, such as light leaking parts 13A, 13B, and 13C, are disposed discontinuously along the longitudinal direction of the leaky optical fiber 10. The direction in which light propagates within the leaky optical fiber 10 is the same as the traveling direction of the train 3. In this example, the light leaking part 13A is provided on the upstream side, while the light leaking part 13C is provided on the downstream side.

If the length of the train 3 in the traveling direction is 400 m, for example, the light leaking parts 13 are disposed at intervals less than or equal to 400 m, and the leaky optical fibers 10 are installed so that the side on which the light leaking parts 13 are provided faces upward toward the bottom surface of the moving train 3. As shown in Fig. 1, a segment 41 of the railway 2 is located adjacent to and on the upstream side of the base station 4 with respect to the traveling direction of the train 3. No leaky optical fiber 10 is provided on the segment 41. Even in sections of the railway 2 having a segment 41, the distance between the light leaking part 13 located nearest upstream side of the base station 4 and the light leaking part 13 located downstream side of nearest the base station 4 is less than or equal to the length of the train 3 in the traveling direction. Hence, the light leaking parts 13 are always arranged on the railway 2 at shorter intervals than the length of the train 3.

L will be used to denote the leak ratio of the light leaking parts 13. The leak ratio L is the ratio of the quantity of light leaked from the light leaking parts 13 to the quantity of light traveling through the core 11. In order to maintain the leakage from each light leaking part 13 at a fixed amount, the leak ratio must increase gradually toward the downstream side. If L₁ denotes the leak ratio of the first light leaking part 13A counting from the upstream end of the leaky optical fiber 10, and Lᵢ is the leak ratio from the i^{th} light leaking part 13 counting from the upstream end of the leaky optical fiber 10, the leak ratio must be changed so that Li = Lᵢ₋₁/(1-Lᵢ₋₁) or Lᵢ = 1/(1-(i-1)*L₁). For example, if the input amount of the optical signal into the leaky optical fiber 10 is 10 mW and the amount of leakage in each light leaking part 13 is a constant 50 µW, the light leaking parts 13 must be arranged and configured so that the leak ratio gradually increases from 0.5% at the light leaking part 13A, to 0.5025% at the light leaking part 13B and to 0.5051% at the light leaking part 13C. The leak ratio Lᵢ is adjusted by varying the refractive index or size of the light leaking parts 13, for example.

In addition, the length of the light leaking parts 13 with respect to the direction in which the train 3 travels is less than or equal to the wavelength for 1 bit worth of the transfer rate. If the length of the light leaking parts 13 were to spatially exceed the optical signal for 1 bit of the transfer rate, a plurality of bit signals would be spatially emitted at once. Mixing of these plurality of signals in space would generate signal distortion and greatly increase the possibility of bit error. When the transfer rate of the leaky optical fiber 10 is set to 1 Gb/s, the spatial length of the optical signal equivalent to 1 bit is approximately 20-30 cm. Hence, the length of the light leaking parts 13 in the longitudinal direction of the leaky optical fiber 10 is preferably less than or equal to the spatial length of the optical signal equivalent to 1 bit.

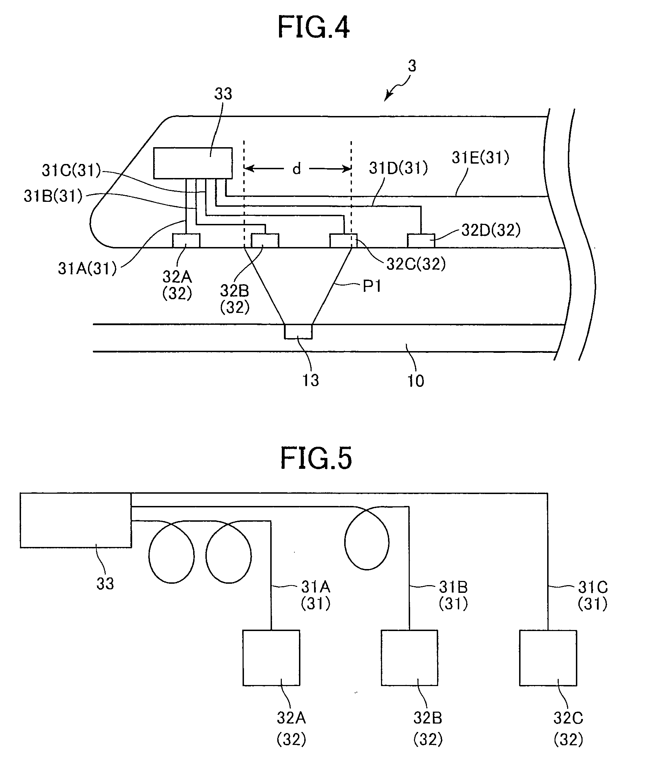

The light receivers 32 are disposed on the bottom surface of the train 3 opposing the leaky optical fibers 10. The light receivers 32 are arranged along the entire length of the train 3 in the direction of travel at intervals less than or equal to a fixed length d (see Fig. 4). Each light receiver 32 is configured of semiconductor light-receiving element, a signal waveform shaper, and a semiconductor laser, for example. The light receiver 32 temporarily converts light irradiated from the light leaking parts 13 of the leaky optical fiber 10 to an electric signal using the semiconductor light-receiving element and, after shaping the signal waveform, converts the electric signal back to an optical signal with the semiconductor laser and outputs the optical signal. Fig. 4 is a side view of the train 3 in a direction orthogonal to both of the traveling direction of the train 3 and the vertical direction and shows a path P1 of light irradiated from the leaky optical fiber 10. As shown in Fig. 4, the light receivers 32 (32A, 32B, 32C, 32D) receive light irradiated from the light leaking parts 13. The length d is determined as follows. When viewed from the side (a direction orthogonal to both of the traveling direction of the train 3 and the vertical direction), the path P1 of light is substantially triangular in shape. The light irradiated on the train 3 forms an optical image whose length in the traveling direction of the train 3 is d.

As shown in Figs. 1 and 5, a plurality of the light receivers 32 is connected to the demodulator 33 by the reception optical fiber 31. While the light receivers 32 appear to be connected by a single reception optical fiber 31 in Fig. 1, in actuality each light receiver 32 (32A, 32B, 32C) is independently connected to the demodulator 33 by one of a plurality of reception optical fibers 31 (31A, 31B, 13C), as shown in Fig. 5. Each light receiver 32 transfers a received signal to the demodulator 33, and the demodulator 33 reproduces the waveform of the signal. Each reception optical fiber 31 is formed of the same material. Further, as shown in Fig. 5, each reception optical fiber 31 has the same length and is looped to fit the arrangement. Thereby optical signals received by the light receivers 32 at the same time also reach the demodulator 33 simultaneously. Since there is no variation of the time required to transmit light signals from each light receiver 32, the demodulator 33 can easily reproduce the signal.

Next, a description will be given of the uplink, that is, the configuration for transmitting light from the train 3 to the plurality of optical fibers 20 along the railway 2.

As shown in Fig. 1, the signal generator 35 is provided on the train 3, and a plurality of the light transmitters 36 is arranged on the bottom surface of the train 3 along the entire length thereof with respect to the traveling direction. The light transmitters 36 are arranged at prescribed intervals in the direction that the train 3 travels. Each light transmitter 36 is connected to the signal generator 35 by the transmission optical fiber 34.

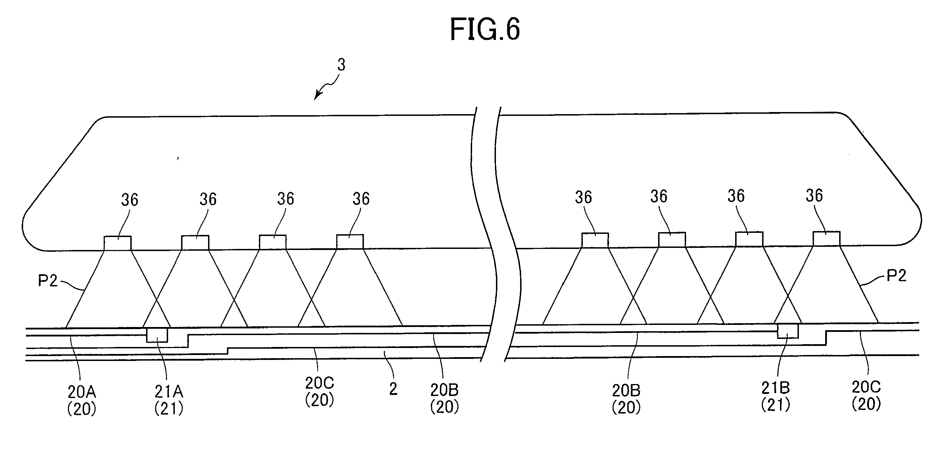

The light receivers 21 on the railway 2 are disposed at intervals shorter than the length of the train 3 in the traveling direction. In the embodiment, the light receivers 21 are positioned at the same locations as the light leaking parts 13. Hence, the interval between light receivers 21 is the same as the interval between light leaking parts 13. The light receivers 21 are positioned so as to oppose the light transmitters 36 in the train 3 when the train 3 passes. All light receivers 21 existing between two neighboring base stations 4 are connected to the base station 4 on the upstream side among the two neighboring base station 4 via the optical fibers 20. Each light receiver 21 is configured of a semiconductor light-receiving element, a signal waveform shaper, and a semiconductor laser, for example. The light receiver 21 temporary coverts light irradiated from the light transmitters 36 to an electric signal with the semiconductor light-receiving element and, after shaping the signal waveform, converts the electric signal back to an optical signal with the semiconductor laser and outputs the optical signal. Further, as with the reception optical fibers 31 shown in Fig. 5, each of the light receivers 21 (21A and 21B) is independently connected to the base station 4 by one of a plurality of the optical fibers 20 (20A, 20B) as shown in Fig. 6. Each of the optical fibers 20 is formed of the same material. As with the reception optical fibers 31 shown in Fig. 5, each of the optical fibers 20 is formed of the same length and is partially curved so as to fit the arrangement, thereby ensuring that optical signals received by the light receivers 21 at the same time also reach the base station 4 simultaneously. Since there is no variation in the time required for optical signals to be transmitted from each light receiver 21, this configuration can achieve optical communications with few bit errors.

Fig. 6 is a side view showing paths P2 of light irradiated from the light transmitters 36. When viewed from the side (a direction orthogonal to both of the traveling direction of the train 3 and the vertical direction), each of the paths P2 is substantially triangular in shape. The irradiated light forms an optical image on the railway 2. As shown in Fig. 6, the light transmitters 36 are arranged so that light irradiated from the light transmitters 36 onto the light receivers 21 (21A and 21B) disposed on the railway 2 form optical images that overlap in the traveling direction of the train 3. In other words, when the train 3 is moving along the railway 2, the optical images formed by light emitted from any two neighboring light transmitters 36 toward the railway 2 have an overlapping region. This overlapping region passes over each of the light receivers 21. Further, the wavelengths of the two light beams irradiated from the two adjacent light transmitters 36 on the train 3 and the single light beam irradiated from the light leaking part 13 on the railway 2 have different wavelengths from one another in order to avoid noise from interference. In other words, the wavelengths of light irradiated from any two neighboring light transmitters 36 are different from each other and also different from the wavelength of light emitted from the light leaking parts 13.

With the mobile optical communication system 1 having the construction described above, light transmitted from the base station 4 travels inside the core 11 while repeatedly being reflected at boundary between the core 11 and cladding 12. A portion of the light incident on the light leaking part 13 leaks out of the leaky optical fiber 10. The light receivers 32 in the train 3 receive this leaked light and transfer the received light to the demodulator 33 via the reception optical fiber 31. The demodulator 33 reproduces the optical signal and transmits this signal to a terminal (not shown) in the train 3. In the meantime, an optical signal generated by the signal generator 35 is irradiated toward the railway 2 from the light transmitters 36. The light receivers 21 receive this irradiated optical signal and transmit the received signal to the base station 4 via the optical fibers 20. The base station 4 in turn transmits the optical signal to the relay station 5, where the signal is demodulated with a demodulator (not shown) and relayed to the Internet or another network.

In the embodiment, the base stations 4 are disposed at the same positions as the ATC units. Hence, only one train 3 can exist between two adjacent base stations 4 at any one time. This configuration facilitates the seamless transfer (handover) of communications described below. With two neighboring base stations 4, the base station 4 on the upstream side with respect to the traveling direction of the train 3 will be referred to as the upstream base station 4, while the other base station 4 will be referred to as the downstream base station 4. When traveling between the upstream base station 4 and the downstream base station 4, the train 3 communicates with the upstream base station 4. When the ATC unit determines that the train 3 has passed the downstream base station 4, the downstream base station 4 begins transmitting the optical signal for the train 3 to the leaky optical fiber 10 connected to the downstream base station 4. The downstream base station 4 is simultaneously set to process an optical signal received by the light receivers 21. This completes preparations for communications between the downstream base station 4 and the train 3. However, the upstream base station 4 continues communications with the train 3 at this stage. These communications may be ended after the train 3 passes the downstream base station 4, or may be continued until the next train 3 approaches and the target of communications is switched to this next train 3. This control of communication handover is performed centrally in the relay station 5 and enables seamless communication handover, even at the moment the train 3 passes the base station 4.

The light receivers 21 disposed on the railway 2 may also be used for switching communications. At the instant the relay station 5 detects an optical signal from the train 3 has been inputted into the light receiver 21 positioned farthest downstream among light receivers 21 connected to the upstream base station 4, the downstream base station 4 begins transmitting an optical signal for the train 3 to the leaky optical fiber 10 connected to the downstream base station 4. The downstream base station 4 is simultaneously set to process an optical signal received by each light receiver 21. This control is performed centrally in the relay station 5. According to this method, the seamless transfer (handover) of communications can be implemented, even when the base stations 4 are installed at different locations from the ATC units.

According to the mobile optical communication system 1 of the embodiment described above, the light leaking parts 13 are disposed discontinuously at intervals less than or equal to the length of the train 3 in the traveling direction. Hence, light leaking from the light leaking parts 13 can be limited, with respect to the traveling direction of the train 3, to an amount less than that emitted from a continuously formed light leaking part. By reducing the amount of needless light leakage in this way, the optical signal can propagate over a longer distance. Further, the train 3 can reliably receive light leaking from the light leaking parts 13 at any point on the railway 2, thereby achieving a seamless downlink.

Further, the plurality of light receivers 32 is disposed on the bottom surface of the train 3 across the entire length of the train 3 in the traveling direction at fixed intervals in the traveling direction less than or equal to the length d. Therefore, at least one of the light receivers 32 can reliably receive light leaked from the light leaking parts 13, achieving a seamless downlink.

According to the mobile optical communication system 1 of the embodiment described above, the leak rate of the plurality of light leaking parts 13 increases gradually downstream in the direction of light propagation. Hence, the quantity of light leaked from the light leaking parts 13 can be kept constant, ensuring stable optical communications.

Further, since the mobile optical communication system 1 employs the leaky optical fibers 10, device installation is simplified, thereby reducing the cost of installation. Also, the light leaking parts 13 extend over only a portion of the leaky optical fiber 10 in the circumferential direction, thereby restricting the amount of light leaking from the light leaking parts 13 in the circumferential direction. By reducing the amount of needlessly leaked light in this way, the optical signal can propagate over a longer distance.

Further, the light transmitters 36 are arranged so that optical images irradiated toward the railway 2 from any two neighboring light transmitters 36 form an overlapping region that passes over the light receivers 21 when the train 3 moves along the railway 2. Therefore, the light receivers 21 reliably receive light irradiated from at least one of the light transmitters 36, achieving a seamless uplink. Further, the wavelengths of light irradiated from any two neighboring light transmitters 36 are different from each other and also differ from the wavelength of light transmitted from the light leaking parts 13. This configuration avoids noise caused by interference between light irradiated from the two neighboring light transmitters 36 and light irradiated from the light leaking parts 13. Hence, the light receivers 32 reliably receive light transmitted from the light leaking parts 13, and the light receivers 21 reliably receive light transmitted from the light transmitters 36, thereby achieving bi-directional communications with no crosstalk.

Further, the light receivers 21 of the mobile optical communication system 1 are provided along the traveling direction of the train 3 at intervals shorter than the length of the train 3 in the traveling direction. Accordingly, the light receivers 21 receive an optical signal transmitted from the train 3 when the train 3 is at any position on the railway 2, achieving a seamless uplink.

According to the mobile optical communication system 1 of the embodiment described above, the length of the light leaking parts 13 in the traveling direction of the train 3 is less than or equal to the spatial length of an optical signal for 1 bit in the transfer rate. Consequently, a plurality of bit signals is not emitted into space at once, achieving a stable downlink with no signal distortion.

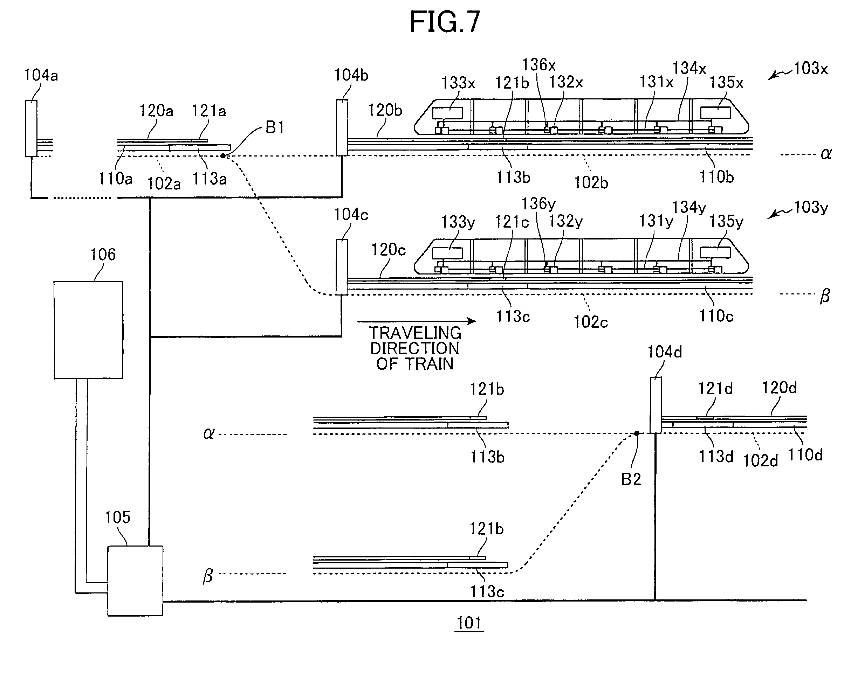

Next, a mobile optical communication system 101 according to a second embodiment of the present invention will be described with reference to Fig. 7. The mobile optical communication system 101 according to the second embodiment implements seamless optical communications when one train passes another stopped train. In the mobile optical communication system 101, the rail track splits into two branches that are subsequently rejoined. More specifically, a railway 102a branches into a railway 102b and a railway 102c at a branching point B1 on the downstream end of the railway 102a. The railways 102b and 102c run parallel to each other for a fixed interval before converging with a railway 102d at a converging point B2 located on the downstream ends of the railways 102b and 102c. A base station 104a is disposed near the upstream end of the railway 102a; a base station 104b is disposed near the upstream end of the railway 102b; a base station 104c is disposed near the upstream end of the railway 102c; and a base station 104d is disposed near the upstream end of the railway 102d. The base stations 104a-104d are arranged at intervals such that a maximum of one train can occupy an interval between any two neighboring base stations at any one time. In the embodiment, the base stations 104a-104d are installed at the same positions as the ATC units. Although the railway 102b appears to end at α in Fig. 7, the railway 102b actually continues at α. Similarly, the railway 102c continues at β.

A plurality of leaky optical fibers 110a-110d and a plurality of normal optical fibers 120a-120d are provided along the railways 102a-102d, respectively. The leaky optical fibers 110a-110d and the optical fibers 120a-120d are connected to the respective base stations 104a-104d. The base stations 104a-104d are each connected to a relay station 105 by separate network lines. The relay station 105 demodulates signals transmitted from the base stations 104a-104d with a demodulator (not shown) and subsequently relays the signals to an Internet base station 106 connected to the relay station 105.

Trains 103x and 103y are respectively provided with a plurality of reception optical fibers 131x and 131y, a plurality of transmission optical fibers 134x and 134y, demodulators 133x and 133y, signal generators 135x and 135y, and light transmitters 136x and 136y. The structures of these devices provided in the trains 103x and 103y are identical to the reception optical fibers 31, transmission optical fiber 34, demodulator 33, signal generator 35, and light transmitter 36 in the train 3 according to the first embodiment respectively.

Light receivers 121a-121d are disposed at positions on the railways capable of opposing the light transmitter 136x in the train 103x or the light transmitter 136y in the train 103y when the train 103x or 103y travels over the railways.

The structures of the leaky optical fibers 110a-110d, optical fibers 120a-120d, and the light receivers 121a-121d are respectively identical to the structures of the leaky optical fibers 1, optical fibers 20, and light receivers 21 according to the first embodiment, but the structure near the base stations 104b-104d differs as described below.

The leaky optical fibers 110a-110d have respective light leaking parts 113a-113d. The distance between the light leaking part 113a positioned farthest downstream among the plurality of light leaking parts 113a and the light leaking part 113b positioned farthest upstream among the plurality of light leaking parts 113b is less than or equal to the length of the train 103x. Similarly, the distance between the light leaking part 113a positioned farthest downstream among the plurality of light leaking parts 113a and the light leaking part 113c positioned farthest upstream among the plurality of light leaking parts 113c is less than or equal to the length of the train 103y. Further, the distance between the light leaking part 113b positioned farthest downstream among the plurality of light leaking parts 113b and the light leaking part 113d positioned farthest upstream among the plurality of light leaking parts 113d is less than or equal to the length of the train 103x. Similarly, the distance between the light leaking part 113c positioned farthest downstream among the plurality of light leaking parts 113c and the light leaking part 113d positioned farthest upstream among the plurality of light leaking parts 113d is less than or equal to the length of the train 103y. Therefore, at least one of the light leaking parts 113a-113d exists within a range equivalent to the length of the trains 103x and 103y at any point on the railways 102a-102d.

Each of the light receivers 121a-121d positioned near the base stations 104b-104d has the same structure, as well as each of the light leaking parts 113a-113d positioned near the base stations 104b-104d. Therefore, one of the light receivers 121a-121d is present within a range equivalent to the length of the trains 103x and 103y at any point on any of the railways 102a-102d. In the embodiment, the light leaking parts 113 and the light receivers 121 are provided in the same locations.

As described above, the base stations 104a-104d are disposed in the same locations as the ATC units. Hence, the configuration in the second embodiment can also achieve seamless communication transfers (handovers) as described below. In an initial state, neither the train 103x nor train 103y is present on the railways 102a-102d. From this state, the train 103x goes on the railway 102a, at which point the train 103x communicates with the base station 104a. Next, the train 103x advances onto the railway 102b. When the ATC unit determines that the train 103x is passing the base station 104b, the base station 104b begins transmitting an optical signal for the train 103x to the leaky optical fiber 110b. The base station 104b is also simultaneously set to process an optical signal received from the light receiver 121b. This completes preparations for communications between the base station 104b and the train 103x. However, communications between the train 103x and base station 104a continue at this stage. These communications may be ended after the train 103x passes the base station 104b or may be continued until the next train approaches and the target of communications is switched to this next train. Next, the train 103x is halted at a prescribed position on the railway 102b. The stopping position may be a segment of the railway corresponding to a platform, for example.

Subsequently, the train 103y goes on the railway 102a while communicating with the base station 104a. The train 103y proceeds onto the railway 102c. When the ATC unit determines that the train 103y is passing the base station 104c, the base station 104c begins transmitting an optical signal for the train 103y to the leaky optical fiber 110c. The base station 104c is simultaneously set to process an optical signal received by the light receiver 121c. This completes preparations for communications between the base station 104c and the train 103y. However, the train 103y continues communications with the base station 104a at this stage. These communications may be ended after the train 103y passes the base station 104c or may be continued until the next train approaches and the target of communications is switched to this next train.

Here, the train 103y passes the train 103x. When the ATC unit determines that the train 103y is passing the base station 104d, the base station 104d begins transmitting an optical signal for the train 103y to the leaky optical fiber 110d. The base station 104d is simultaneously set to process an optical signal received by the light receiver 121d. This completes preparations for communications between the base station 104d and the train 103y. However, the train 103y continues communications with the base station 104c at this stage. These communications may be ended after the train 103y passes the base station 104d or may be continued until the next train approaches and the target of communications is switched to this next train.

The train 103x departs from the platform after the train 103y passes a base station (not shown) positioned on the downstream end of the railway 102d. When the ATC unit determines that the train 103x is passing the base station 104d, the base station 104d begins transmitting an optical signal for the train 103x to the leaky optical fiber 110d. The base station 104d is simultaneously set to process an optical signal received by the light receiver 121d. This completes preparations for communications between the base station 104d and the train 103x. However, the train 103x continues communications with the base station 104b at this stage. These communications may be ended after the train 103x passes the base station 104d or may be continued until the next train approaches on the railway 102b and the target of communications is switched to this next train. The above control processes are performed centrally in the relay station 105. With this configuration, it is possible to transfer communications seamlessly at the moment the train 103x passes the base station 104b and the base station 104d. Seamless communication transfers (handovers) can also be implemented at the moment the train 103y passes the base station 104c and the base station 104d.

The relay station 105 can also switch communications using the light receivers 121a-121d disposed on the railways 102a-102d, respectively. When the train 103x is traveling on the railway 102a, it is probable that the course of the train 103x onto the railway 102b has already been set at this stage. Therefore, the relay station 105 can control both the base stations 104b and 104c based on this course information. In this case, the base station 104b begins transmitting an optical signal for the train 103x to the leaky optical fiber 110b connected to the base station 104b the moment it is detected that an optical signal from the train 103x has been inputted into the light receiver 121a positioned farthest downstream among the plurality of light receivers 121a connected to the base station 104a. The base station 104b is simultaneously set to process an optical signal received from the light receivers 121b. The train 103x is halted after proceeding onto the railway 102b.

Next, when the train 103y is traveling on the railway 102a, it is probable that the course of the train 103y onto the railway 102c has already been set at this stage. Therefore, the relay station 105 can control both the base stations 104b and 104c based on this course information. In this case, the base station 104c begins transmitting an optical signal for the train 103y to the leaky optical fiber 110c connected to the base station 104c the moment it is detected that an optical signal from the train 103y has been inputted into the light receiver 121a positioned farthest downstream among the plurality of light receivers 121a connected to the base station 104a. The base station 104c is simultaneously set to process an optical signal received from each of the light receivers 121c. Next, the base station 104d begins transmitting an optical signal for the train 103y to the leaky optical fiber 110d connected to the base station 104d the moment it is detected that an optical signal from the train 103y has been inputted into the light receiver 121c positioned farthest downstream among the light receivers 121c connected to the base station 104c. The base station 104d is simultaneously set to process an optical signal received from each of the light receivers 121d.

The train 103x departs from the platform after the train 103y has passed a base station (not shown) on the downstream end of the railway 102d. The base station 104d begins transmitting an optical signal for the train 103x to the leaky optical fiber 110d connected to the base station 104d the instant it is detected that an optical signal from the train 103x has been inputted into the light receiver 121b positioned farthest downstream among the light receivers 121b connected to the base station 104b. The base station 104d is simultaneously set to process an optical signal received from each of the light receivers 121d. The above control processes are performed centrally in the relay station 105. According to this method, the seamless transfer of communications can be achieved even when base stations are installed at different positions from the ATC units.

In the mobile optical communication system 101 according to the second embodiment described above, the trains 103x and 103y are constantly communicating with one of the base stations 104a-104d as the train 103y passes the train 103x. Hence, both the trains 103x and 103y can achieve seamless bi-directional communications.

In the mobile optical communication system 101 according to the second embodiment, a plurality of trains (the trains 103x and 103y in this example) is present on the railways 102a-102d. The mobile optical communication system 101 is also provided with a branching point B1 at which the single railway 102a branches into a plurality of railways 102b and 102c, and a converging point B2 at which the railways 102b and 102c converge into the railway 102d. Here, the system is configured so that a maximum of one train (the train 103x or the train 103y) may be present in each railway (each segment) 102a-102d. Specifically, a maximum of one train may be present on each of the railways 102b and 102c, serving as branch railways. Further, the base stations 104a-104d are provided with a one-to-one correspondence with the railways 102a-102d. In addition, the leaky optical fibers 110a-110d and the light receivers 121a-121d are provided for the corresponding railways 102a-102d. Accordingly, the leaky optical fibers 110a-110d and the light receivers 121a-121d are connected to the corresponding base stations 104a-104d. Hence, the trains 103x and 103y can independently perform bi-directional communications without crosstalk therebetween.

While the invention has been described in detail with reference to specific embodiments thereof, it would be apparent to those skilled in the art that many modifications and variations may be made therein without departing from the spirit of the invention, the scope of which is defined by the attached claims. For example, the optical fibers 20 and light receivers 21 are provided along the railway 2 in the embodiments described above. However, it is also possible to provide only the light receivers 21 along the railway 2 with the optical fibers 20 provided not along the railway 2. This is also true with the light transmitters. In other words, it is possible to provide only the light leaking parts 13 along the railway 2 with the non-leaking parts of the leaky optical fiber 10 provided not along the railway 2.

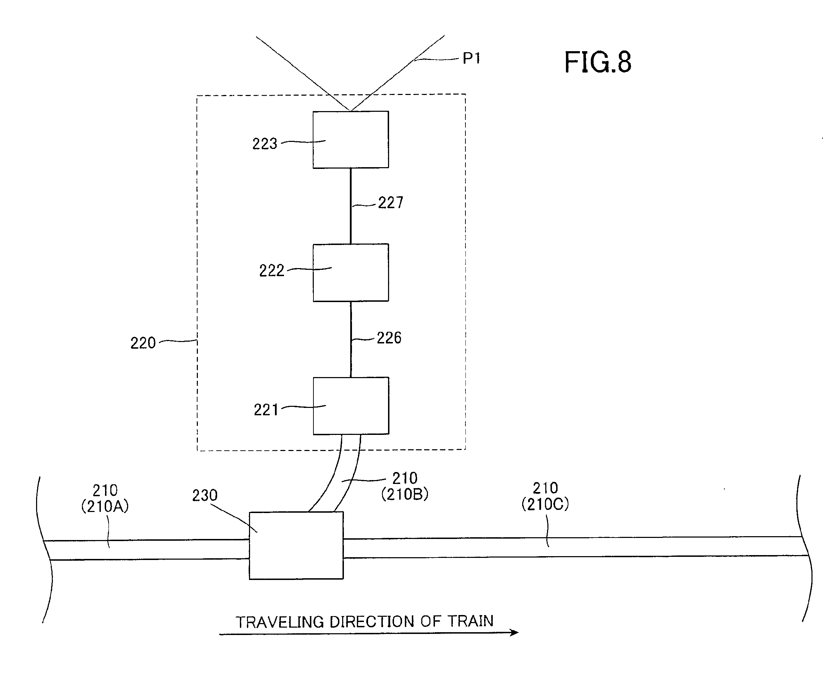

It is also possible to employ normal (i.e., without light leaking parts) optical fibers 210 (210A, 210B, 210C) in place of the leaky optical fibers 10 and to provide light transmitters 220 at positions corresponding to the light leaking parts, as shown in Fig. 8. The optical fiber 210A extends from the upstream side in the traveling direction of the train, with the downstream end connected to a fiber coupler 230. The optical fiber 210C has an upstream end connected to the fiber coupler 230 and extends downstream, with the downstream end connected to another fiber coupler 230 (not shown). Hence, the optical fibers 210A and 210C extend along the railway. The optical fiber 210B has one end connected to the fiber coupler 230 as if branching off from the optical fibers 210A and 210C. The other end of the optical fiber 210B is connected to the light transmitter 220 (specifically, a light-receiving element 221). The light transmitter 220 includes the light-receiving element 221, a signal processing circuit 222, and a light-emitting element 223. The light-receiving element 221 is formed of a photodiode or the like. The light-emitting element 223 is configured of a laser diode or the like. The light-receiving element 221 and the signal processing circuit 222 are connected by an electric cable 226. The signal processing circuit 222 and light-emitting element 223 are connected by an electric cable 227. When light propagating along the optical fiber 210A is inputted into the fiber coupler 230, the light is split and outputted into the optical fibers 210B and 210C. Light propagating along the optical fiber 210B after being outputted from the fiber coupler 230 is inputted into the light-receiving element 221. The light-receiving element 221 performs the optical/electrical conversion, that is, the light-receiving element 221 converts the optical signal to an electric signal. The light-receiving element 221 transmits this electric signal to the signal processing circuit 222 via the electric cable 226. The signal processing circuit 222 amplifies the inputted electric signal and shapes its waveform, transmitting the resulting electric signal to the light-emitting element 223 via the electric cable 227. The light-emitting element 223 performs the electrical/optical conversion, that is, the light-emitting element 223 converts the electric signal back to an optical signal. The light-emitting element 223t transmits the optical signal toward the train 3 (see Fig. 4) along the path P1.

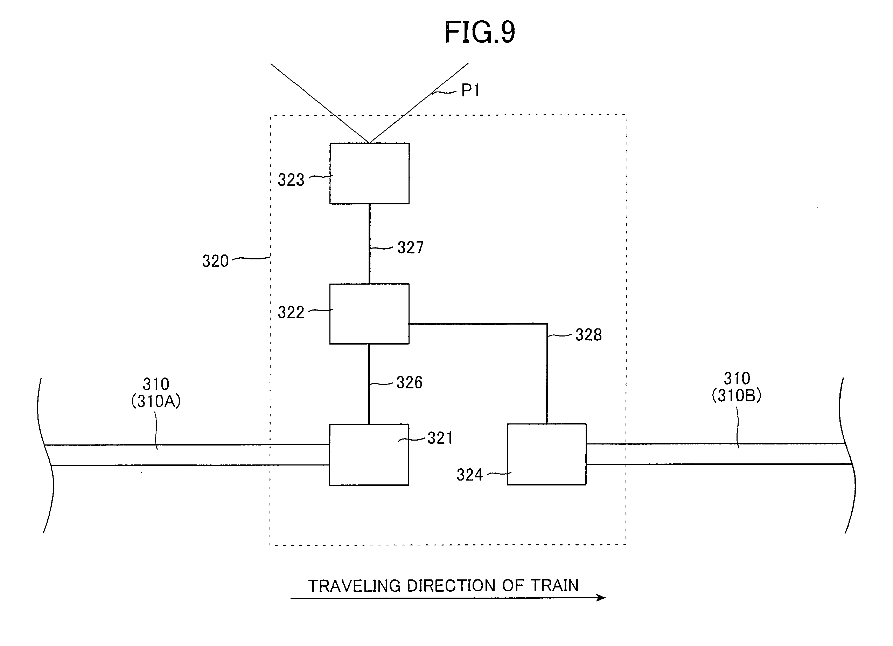

Alternatively, it is possible to provide normal (i.e., not including light leaking parts) optical fibers 310 (310A and 310B) in place of the leaky optical fibers 10 and to provide a light transmitter 320 at each position equivalent to a light leaking part, as shown in Fig. 9. Both the optical fibers 310A and 310B extend along the railway 2. The light transmitter 320 includes a light-receiving element 321, a signal processing circuit 322, a light-emitting element 323, and a light-emitting element 324. The light-receiving element 321 and the signal processing circuit 322 are connected via an electric cable 326, the signal processing circuit 322 and the light-emitting element 323 are connected via an electric cable 327, and the signal processing circuit 322 and the light-emitting element 324 are connected via an electric cable 328. The optical fiber 310A is connected to the light-receiving element 321. The light-emitting element 324 is connected to the optical fiber 310B. Light propagating along the optical fiber 310A is inputted into the light-receiving element 321. The light-receiving element 321 performs the optical/electrical conversion that converts the optical signal to an electric signal. The light-receiving element transmits the electric signal to the signal processing circuit 322 via the electric cable 326. The signal processing circuit 322 amplifies the electric signal and shapes the waveform of the signal, transmitting the resulting electric signal to the light-emitting element 323 via the electric cable 326 and to the light-emitting element 324 via the electric cable 328. The light-emitting element 323 performs the electrical/optical conversion that converts the electric signal back to an optical signal. The light-emitting element 323 transmits the optical signal toward the train 3. The light-emitting element 324 also performs the electrical/optical conversion that converts the electric signal back to an optical signal. The light-emitting element 324 transmits this optical signal to the optical fiber 310B.
A system using the light transmitters 220 or 320 can achieve accurate optical communications with few errors since the waveform of the electric signal is shaped through the optical/electrical conversion and the electrical/optical conversion. Providing the light transmitters 220 or 320 along the railway 2 eliminates the need to provide an optical fiber connected to the light transmitters along the railway 2.

The light transmitters 220 and 320 shown in Figs. 8 and 9, respectively, may also be configured to perform optical-optical control or the like rather than performing optical/electrical and electrical/optical conversions. Since the waveform is also shaped through optical-optical control, this method can also achieve accurate optical communications with few errors. Although not shown in Figs. 8 and 9, the optical fiber 210B and the light-receiving element 221, the optical fiber 310A and the light-receiving element 321, and the light-emitting element 324 and the optical fiber 310B should be appropriately connected through optical parts.

In the embodiments described above, the light transmitters 36, 136x, and 136y are disposed on the train side. However, transmission leaky optical fibers may be provided on the train side in place of the light transmitters such that optical signals are transmitted from the light leaking parts.

### INDUSTRIAL APPLICABILITY

The mobile optical communication system according to the present invention is suitable for implementing broadband communications between a Shinkansen or other railway train and the Internet.

## Claims

1. A mobile optical communication system (1, 101) comprising:
a moving body (3, 103x, 103y) that includes a plurality of moving body side light-receiving means (32, 132x, 132y); and
an optical fiber cable (10, 110a-110d) that is laid along a path of the moving body (2, 102a-102d) and that has a plurality of fiber side light-transmitting means (13, 113a-113d) transmitting light that is received by the plurality of moving body side light-receiving means,
wherein the plurality of fiber side light-transmitting means are arranged at intervals less than or equal to a length of the moving body with respect to a moving direction,
wherein the moving body side light-receiving means are arranged in the moving direction of the moving body at prescribed intervals less than or equal to the length (d) of an optical image irradiated from the fiber side light-transmitting means toward the moving body in the moving direction of the moving body.

2. The mobile optical communication system according to claim 1, wherein the optical fiber cable is a leaky optical fiber cable that comprises:
a core (11);
a cladding (12) that is fixed to an outside of the core and that has a refractive index lower than a refractive index of the core; and
a plurality of light leaking parts (13, 113a-113d) that are formed discontinuously in the moving direction of the moving body and in contact with the core and that have a refractive index lower than the refractive index of the core and higher than the refractive index of the cladding, the light leaking part functioning as the fiber side light-transmitting means.

3. The mobile optical communication system according to claim 2, wherein the light leaking part is provided in only a portion of the optical fiber cable with respect to a peripheral direction of the cable.

4. The mobile optical communication system according to claims 2 or 3, wherein a light leaking part located downstream in the moving direction of the moving body among the plurality of light leaking parts has a higher leak rate of light than an upstream light leaking part located upstream among the plurality of light leaking parts.

5. The mobile optical communication system according to claim 2, wherein a longitudinal length of light leaking part is less than or equal to a spatial length of a propagating optical signal equivalent to 1 bit.

6. The mobile optical communication system according to claim 1, wherein the fiber side light-transmitting means is a light transmitter (220, 320).

7. The mobile optical communication system according to claim 1, wherein the moving body comprises a plurality of moving bodies (103x, 103y), each of the plurality of the moving bodies having a plurality of corresponding moving body side light-receiving means (132x, 132y);
wherein the path of the moving body has:
a branching position (B1) at which the path branches from a single path into a plurality of branch paths (102b, 102c); and
a converging position (B2) at which a plurality of branch paths converge back into a single path,
wherein the path of the moving body has a plurality of segments (102a-102d) that allow only one moving body from among the plurality of moving bodies to exist in each segment at the same time,
wherein each branch path functions as one of the plurality of segments,
wherein the mobile optical communication system further comprises a plurality of base stations (104a-104d) having a one-to-one correspondence with the plurality of segments,
wherein the plurality of fiber side light-transmitting means in each segment are connected to the corresponding base station.

8. A mobile optical communication system (1, 101) comprising:
a moving body (3, 103x, 103y) that includes a plurality of moving body side light-transmitting means (36, 136x, 136y); and
an optical fiber cable (10, 110a-110d) that is laid along a path of the moving body (2, 102a-102d) and that has a plurality of fiber side light receiving means that are configured of receiving light that is transmitted from the plurality of moving body side light-transmitting means,
wherein the moving body side light-transmitting means are arranged along a moving direction of the moving body,
wherein optical images irradiated toward the path of the moving body from any two neighboring moving body side light-transmitting means have an overlapping region that passes over each fiber side light-receiving means when the moving body moves along the path,
wherein the plurality of fiber side light-receiving means are arranged at intervals less than or equal to a length of the moving body in the moving direction.

9. The mobile optical communication system according to claim 8, wherein wavelengths of light transmitted from any two neighboring moving body side light-transmitting means are different from each other.

10. The mobile optical communication system according to claims 8 or 9, wherein the moving body comprises a plurality of moving bodies (103x, 103y), each of the plurality of the moving bodies having a plurality of corresponding moving body side light-transmitting means (136x, 136y);
wherein the path of the moving body includes:
a branching position (B1) at which the path branches from a single path into a plurality of branch paths (102b, 102c); and
a converging position (B2) at which a plurality of branch paths converge back into a single path,
wherein the path of the moving body has a plurality of segments (102a-102d) that allow only one moving body from among the plurality of moving bodies to exist in each segment at the same time,
wherein each branch path functions as one of the plurality of segments,
wherein the mobile optical communication system further comprises a plurality of base stations (104a-104d) having a one-to-one correspondence with the plurality of segments,
wherein the plurality of fiber side light-transmitting means in each segment are connected to the corresponding base station.

11. A mobile optical communication system (1, 101) comprising:
a moving body (3, 103x, 103y) that includes a plurality of moving body side light-receiving means (32, 132x, 132y) and a plurality of moving body side light-transmitting means (36, 136x, 136y);
a first optical fiber cable (20, 120a-120d) that is laid along a path of the moving body (2, 102a-102d) and that has a plurality of fiber side light-transmitting means (13, 113a-113d) transmitting light that is received by the plurality of moving body side light-receiving means;
a second optical fiber cable (10, 110a-110d) that has a plurality of fiber side light receiving means that are configured of receiving light that is transmitted from the plurality of moving body side light-transmitting means;
wherein the plurality of fiber side light-transmitting means are arranged at intervals less than or equal to a length of the moving body with respect to a moving direction,
wherein the moving body side light-receiving means are arranged in the moving direction of the moving body at prescribed intervals less than or equal to a length (d) of an optical image irradiated from the fiber side light-transmitting means toward the moving body in the moving direction of the moving body,
wherein optical images irradiated toward the path of the moving body from any two neighboring moving body side light-transmitting means have an overlapping region that passes over each fiber side light-receiving means when the moving body moves along the path,
wherein the plurality of fiber side light-receiving means are arranged at intervals less than or equal to the length of the moving body in the moving direction.

12. The mobile optical communication system according to claim 11, wherein wavelengths of light transmitted from any two neighboring moving body side light-transmitting means are different from each other and different from a wavelength of light transmitted from the fiber side light-transmitting means.

13. The mobile optical communication system according to claim 12, wherein the first optical fiber cable is a leaky optical fiber cable that comprises:
a core (11);
a cladding (12) that is fixed to the outside of the core and that has a refractive index lower than a refractive index of the core; and
a plurality of light leaking parts (13) that are formed discontinuously in the moving direction of the moving body and in contact with the core and that have a refractive index lower than the refractive index of the core and higher than the refractive index of the cladding, the light leaking parts functioning as the fiber side light-transmitting means.

14. The mobile optical communication system according to claim 13, wherein the light leaking part is provided in only a portion of the optical fiber cable with respect to a peripheral direction of the cable.

15. The mobile optical communication system according to claim 13, wherein a light leaking part located downstream in the moving direction of the moving body among the plurality of light leaking parts has a higher leak rate of light than an upstream light leaking part located upstream among the plurality of light leaking parts.

16. The mobile optical communication system according to claim 11, wherein the fiber side light-transmitting means is a light transmitter (220, 320).

17. The mobile optical communication system according to claim 11, wherein the moving body comprises a plurality of moving bodies (103x, 103y), each of the plurality of the moving bodies having the corresponding moving body side light-transmitting means (136x, 136y) and a plurality of corresponding moving body side light-receiving means (132x, 132y);
wherein the path of the moving body has:
a branching position (B1) at which the path branches from a single path into a plurality of branch paths (102b, 102c); and
a converging position (B2) at which a plurality of branch paths converge back into a single path,
wherein the path of the moving body has a plurality of segments (102a-102d) that allow only one moving body from among the plurality of moving bodies to exist in each segment at the same time,
wherein each branch path functions as one of the plurality of segments,
wherein the mobile optical communication system further comprises a plurality of base stations (104a-104d) having a one-to-one correspondence with the plurality of segments,
wherein the plurality of fiber side light-transmitting means in each segment and the plurality of fiber side light-receiving means in each segment are connected to the corresponding base station.

18. A mobile optical communication method comprising:
sending light along a path (2, 102a-102d) of a moving body (3, 103x, 103y);
transmitting the light that is sent along the path of the moving body toward the moving body from a plurality of transmitting positions located on the path of the moving body; and
receiving the light sent toward the moving body at at least one of a plurality of light-receiving positions of the moving body,
wherein the plurality of transmitting positions on the path are arranged at intervals less than or equal to a length of the moving body with respect to a moving direction,
wherein the plurality of light-receiving positions of the moving body are arranged in the moving direction of the moving body at prescribed intervals less than or equal to a length (d) of optical images irradiated from the plurality of transmitting positions on the path toward the moving body in the moving direction of the moving body.

19. A mobile optical communication method comprising:
transmitting light from a plurality of transmitting positions of a moving body;
receiving the transmitted light at at least one of a plurality of light-receiving positions located on a path of the moving body; and
sending, along the path of the moving body, the light received at the at least one of the plurality of light-receiving positions located on the path of the moving body of the moving body,
wherein optical images irradiated toward the path of the moving body from any two neighboring moving side transmitting positions have an overlapping region that passes over each light-receiving position on the path when the moving body moves along the path,
wherein the plurality of light-receiving positions on the path are arranged at intervals less than or equal to a length of the moving body in a moving direction.

20. The mobile optical communication method according to claim 19, wherein wavelengths of light transmitted from any two neighboring moving body side transmitting positions are different from each other.

21. A mobile optical communication method comprising:
sending light along a path (2, 102a-102d) of a moving body (3, 103x, 103y);
transmitting the light that is sent along the path of the moving body toward the moving body from a plurality of transmitting positions;
receiving the light sent toward the moving body at at least one of a plurality of light-receiving positions of the moving body;
transmitting light from a plurality of transmitting positions located on a moving body;
receiving the transmitted light at at least one of a plurality of light-receiving positions located on the path of the moving body; and
sending, along the path of the moving body, the light received at the at least one of the plurality of light-receiving positions located on the path of the moving body,
wherein the plurality of transmitting positions on the path are arranged at intervals less than or equal to a length of the moving body with respect to a moving direction,
wherein the plurality of light-receiving positions of the moving body are arranged in the moving direction of the moving body at prescribed intervals less than or equal to a length (d) of optical images irradiated from the plurality of transmitting positions on the path toward the moving body in the moving direction of the moving body,
wherein optical images irradiated toward the path of the moving body from any two neighboring moving side transmitting positions have an overlapping region that passes over each light-receiving position on the path when the moving body moves along the path,
wherein the plurality of light-receiving positions on the path are arranged at intervals less than or equal to the length of the moving body in the moving direction.

22. The mobile optical communication method according to claim 21, wherein wavelengths of light transmitted from any two neighboring moving body side transmitting positions are different from each other and different from a wavelength of light transmitted from the transmitting position on the path.
